# EUROPEAN PATENT SPECIFICATION

(11) **EP 1 267 090 B1**
(45) Date of publication and mention of the grant of the patent: **08.03.2006**
(21) Application number: 02445074.4
(22) Date of filing: 10.06.2002
(51) Int. Cl.: F16C 35/067, E06B 9/50, E06B 9/174, F16C 35/077

(54) **A mounting means**
Montagevorrichtung
Dispositf de montage

(30) Priority: 12.06.2001 SE 0102081
(43) Date of publication of application: 18.12.2002
(73) Proprietor: Aktiebolaget SKF, 415 50 Göteborg (SE)
(72) Inventor: Kullin, Jonas, 438 91 Landvetter (SE); Göthberg, Sven, 421 59 Västra Frölunda (SE)
(74) Representative: Westman, Per Börje Ingemar

(56) References cited:
- DE-A- 3 926 912
- DE-A- 4 019 749
- DE-C- 473 895
- FR-A- 2 620 876

## Description

The present invention refers to a mounting means intended especially for blind mounting of a bearing of the type where the bearing rings are axially moveable relative to each other.

At mounting of such bearings in a blind manner, i.e. where the outer race ring of such a bearing shall be mounted in a bearing seat which is not accessible, often due to the fact that the inner race ring with a set of rolling bodies is arranged on a shaft end integral with an adjacent shaft portion of at least the same diameter as the bearing seat diameter, which means that that it is difficult to control the mounting displacement for both race rings, so as to be sure that both race rings have been positioned in the bearing seat and on the shaft in the correct initial positions.

Such a mounting can be required e.g. in a gear box, where a shaft shall be mounted in such a concealed manner and which shaft e.g. is supported in a toroidal roller bearing, or in another type of axially displaceable bearing. However, the solution according to the present invention is not limited to use in such an application, but it can be applied in several different applications, where similar problems are at hand.

The purpose of the mounting means thus is to ascertain that the outer race ring of the bearing is positioned correctly during the mounting operation, but in such a manner that the shaft is not prevented from expanding following temperature increase and also so that lubricating oil can enter the bearing, and this has been achieved with a mounting means as defined in the accompanying claim 1.

Hereinafter, the invention will be further described with reference to a non-limiting embodiment shown in the accompanying drawings.

Figs. 1 - 4 show schematically and partly in cross section a roller bearing arranged on a shaft under consecutive steps of a mounting sequence for a bearing to be mounted in a concealed manner in a bearing seat with use of a mounting means according to the present invention.

Figs. 5 is a cross-section of the mounting means used in the mounting sequence according to Figs. 1-4.

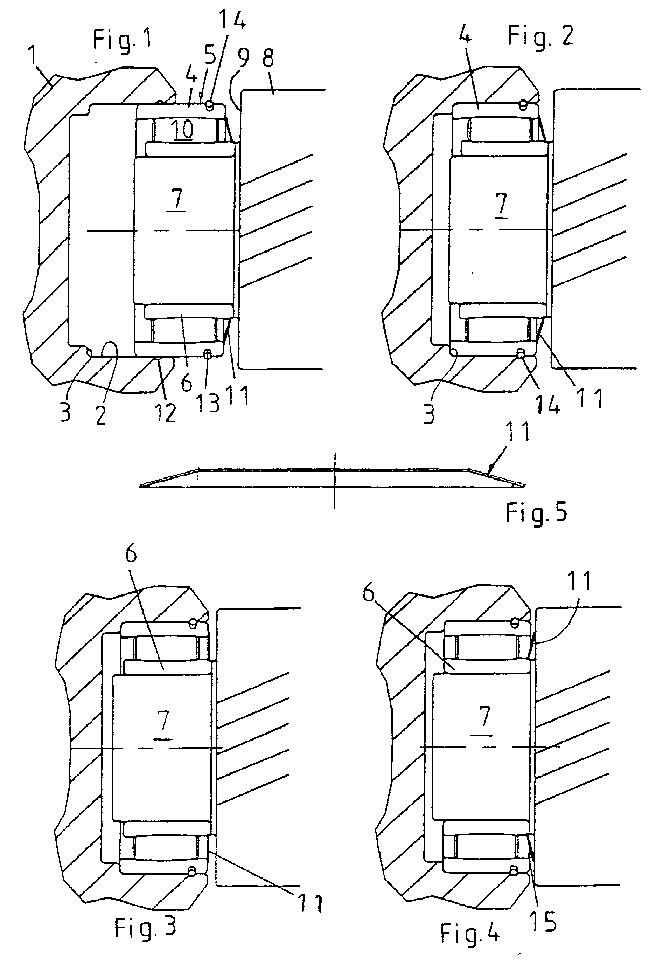

In Fig. 1 is shown schematically a cross-section of a part 1 of a machine member, forming a housing for the bearing and which can be e.g. a housing wall of a gear box or the like, wherein is provided a cylindrical recess 2 forming a bearing seat and having a shoulder 3, against which an outer race ring 4 of a bearing 5 shall engage with one side face in mounted condition. The inner race ring 6 of the bearing 5 is arranged on a shaft journal 7, which shaft journal is integral with a shaft or drum portion 8 having a bigger diameter, thereby forming a shoulder 9 facing the inner race ring 6 of the bearing 5. In the embodiment illustrated the size of this shoulder 9 is such that it extends also over the position of the outer race ring 4 of the bearing, when this is positioned over the inner race ring and spaced apart from this by the rolling bodies 10. Due to the design of the bearing 5, e.g. a toroidal bearing, the outer race ring 4 and the rollers 10 are moveable axially in relation to each other and to the inner race ring 6, and when it relates to a toroidal bearing, they are also angularly moveable relative to each other.

Therefore it is not possible to push the outer race ring 4 into the bearing seat 2 only by transfer of the movement of the inner race ring 6 on the shaft journal 7 by intermediary of the rollers, as the outer race ring will move axially and angularly in relation to the inner race ring. For allowing the outer race ring 4 to be pushed in by the movement of the shaft 7 and through contact with the shoulder 9, it is needed a kind of washer as a mounting means. This washer must span the distance between the shaft journal 7 or the inner ring 6 and the side face of the outer ring 4, and with such a wide washer the space between the side face of the outer race ring 4 and the shoulder 9 of the shaft portion 8 would be bridged, thereby preventing axial movement of the shaft 7,8 which might occur due to increased temperature in the shaft, and this might cause undue stresses in the assembly.

Furthermore by covering a slot between the outer race ring and the side face of the shoulder 9 of the shaft the unrestricted flow of oil into and out of the bearing would be obstructed, leading to lubricant starvation and a possible early breakdown of the bearing.

These problems are solved with the cup-spring shaped washer 11. In the embodiment illustrated in the drawing this washer 11 is fitted at its inner bore periphery to the inner ring 6 of the bearing, although the same effect can be achieved if the washer 11 is fitted with its outer periphery to the outer ring 4 of the bearing.

In the embodiment shown the recess 2 has an inner, circumferential groove 12, whereas the outer bearing ring 4 has an external circumferential groove 13, in which is positioned a locking ring 14. The grooves 12 and 13 are positioned at the same distance from the shoulder 3 and from the side face of the ring 4 abutting the shoulder 3 in mounted position.

In Fig. 1 the bearing rings 4 and 6 are axially displaced by the washer 11 and the outer ring 4 has begun being pushed into the recess 2 in the housing 1, whereby the washer 11 is able to transfer an axial pushing force applied to the shaft journal 7 to the outer bearing ring 4.

In Fig. 2 is shown how the outer bearing ring 4 has reached its final position in the bearing seat 2, abutting the shoulder 3. In this position the locking ring 14 has entered into the groove 12 in the bearing seat 2, thereby arresting the ring 4 in this position. In this position the washer 11 has begun to flatten out, although the bearing rings 4 and 6 are still axially displaced relative to each other.

In Fig. 3 the shaft journal 7 has been pushed further in axial direction, thereby displacing only the inner bearing ring 6, as the outer bearing ring engages the shoulder 3. The cup-spring shaped washer 11 thereby has been completely flattened out and it has reached an unstable position, where it can flex in either direction. In this position the space between the bearing rings 4 and 6 is still covered by the washer 11. the bearing ring, and it has here been completely flattened out and it has reached a position, where it can flex in either direction. In this position the space between the bearing rings 4 and 6 is still covered by the washer 11.

In Fig. 4 is finally shown the position of the components in the operating position of the bearing. Here the shaft journal 7 has been pushed a little bit further axially than in the position shown in Fig. 3, whereby the inner race ring 6 has been aligned with the outer race ring 4. At the same time the washer 11 has been pushed beyond its unstable region into a second stable position inverted from that it had at the beginning of the mounting sequence. In the embodiment illustrated the outer edge of the washer 11 has flexed away from its engagement with the side face of the outer bearing ring 4, whereby a passage 15 allowing free oil flow has been opened into the bearing.

Fig. 5 shows a cross section through a thin, cup-spring shaped washer 11 representing a mounting means according to the invention, having a "flip-flop" function, allowing it to transfer an axial pushing force between the two race rings of a bearing until a certain force is applied upon it, whereby it will flex to an inverted shape, such as shown in the drawing and described in connection thereto. The main requirement for the washer 11 is that it is thin enough to have two spaced apart stable positions, and an intermediate unstable region. The thickness of the spring washer 11 can be chosen in dependency of the diametrical measures of the washer, but in order to obtain the desired effect it has proven itself that a thickness of 0.3 mm can be appropriate for a washer having an outer diameter of 47.5 mm and an inner diameter of 33.3 mm and with a distance between the inner and outer rim of 2.3 mm in a neutral position. The material is preferably spring steel.

It is apparent that the mounting means according to the invention as described and illustrated solves the problem of blind mounting of an axially displaceable bearing in a simple and reliable manner, whereby it is also ascertained that an open passage 15 is left between the bearing rings when the mounting operation is ended. It is a further advantage that the washer 11 also can serve for preventing the rollers 10 from falling out of the bearing when this is stored and handled prior to mounting.

The invention is not limited to the embodiment shown, but various modifications are possible within the scope of the appended claims. The arrangement has been shown with circumferential grooves in housing and on bearing ring for receiving a locking ring, but such an arrestment arrangement is not necessary.

## Claims

1. A mounting means intended especially for blind mounting of a bearing of the type where the bearing rings (4, 6) are moveable relative to each other, in a bearing seat (2) in a housing (1) or on a shaft, and incorporating a substantially annular washer (11) intended to be fitted to anyone of the two bearing rings and abutting a side face of the other bearing ring for transfer of axial mounting force between the two bearing rings (4, 6) for mounting of one of the bearing rings in said bearing seat (2),
**characterized therein,**
that the washer (11) is tapering and being arranged to have a first stable position, wherein it can transfer an axial force sufficient for pushing one of the bearing race rings (4) into its seat (2), and an unstable region, encountered after the said race ring (4) has reached its mounted position in the seat (2), wherein the tapering washer (11) under influence of a continued axial force is adapted to flex to an inverted tapering, second stable position, thereby flexing away from the side face of the other bearing ring, thereby opening a passage (15) between the bearing rings (4, 6).

2. A mounting means as claimed in claim 1,
**chacterized therein**,
that the tapering washer (11) is formed as a cup-spring, having an inner and an outer peripheral edge, one of said edges being fitted to one of the bearing rings (6) whereas the other one of said edges loosely engages the side face of the other bearing ring (4) during the mounting and until the bearing is in its operating position.

## Patentansprüche

1. Montagevorrichtung, die insbesondere für die Blindmontage von Lagern einer Art, bei welcher die Lagerringe (4,6) relativ zueinander beweglich sind, in einem Lagersitz (2) in einem Gehäuse (1) oder auf einer Welle gedacht ist und eine im wesentlichen ringförmige Scheibe (11) umfaßt, die zum Anbringen an irgendeinem der beiden Lagerringe gedacht ist und an einer Seitenfläche des anderen Lagerrings anliegt, um eine axiale Montagekraft zwischen den, beiden Lagerringen (4, 6) zur Montage eines der Lagerringe in dem Lagersitz (2) zu übertragen, **dadurch gekennzeichnet, daß** die Scheibe (11) schräg geneigt und so ausgebildet ist, daß sie eine erste stabile Stellung, in welcher sie eine zum Eindrücken eines der Lagerlaufringe (4) in seinen Sitz (2) ausreichende Axialkraft übertragen kann, und einen instabilen Bereich aufweist, der eingenommen wird, nachdem der Laufring (4) seine montierte Position in dem Sitz (2) erreicht hat, wobei die schräg geneigte Scheibe (11) unter dem Einfluß einer fortwirkenden Axialkraft in eine umgekehrt schräg geneigte, zweite stabile Stellung beweglich ist und sich **dadurch** weg von der Seitenfläche des anderen Lagerrings bewegt und einen Durchgang (15) zwischen den Lagerringen (4, 6) öffnet.

2. Montagevorrichtung nach Anspruch 1, **dadurch gekennzeichnet, daß** die schräg geneigte Scheibe (11) als Tellerfeder mit einer inneren und einer äußeren Umfangskante ausgebildet ist, wobei eine der Kanten an einem der Lagerringe (6) angebracht ist, während die andere Kante während der Montage und bis das Lager in seine Betriebsposition gelangt, lose an der Seitenfläche des anderen Lagerrings (4) anliegt.

## Revendications

1. Système de montage destiné en particulier au montage à l'aveugle d'un roulement du type dans lequel les bagues (4, 6) de roulement sont mobiles l'une par rapport à l'autre, dans un siège 2 de roulement présent dans un logement (1) ou sur un arbre, et comportant une rondelle (11) sensiblement annulaire destinée à être mise en place sur l'une quelconque des deux bagues de roulement et butant contre une face latérale de l'autre bague de roulement pour transmettre la force axiale de montage entre les deux bagues (4, 6) de roulement pour le montage d'une des bagues de roulement dans ledit siège (2) de roulement,
**caractérisé en ce que**
la rondelle (11) est conique et conçue pour avoir une première position stable, dans laquelle elle peut transmettre une force axiale suffisante pour pousser dans son siège (2) l'une des bagues (4) de roulement, et une région instable, rencontrée après que ladite bague (4) a atteint sa position de montage dans le siège (2), dans laquelle la rondelle conique (11), sous l'influence d'une force axiale continue, est apte à fléchir pour venir dans une deuxième position stable présentant une conicité inversée, en fléchissant donc de manière à s'écarter de la face latérale de l'autre bague de roulement en ouvrant de ce fait un passage (15) entre les bagues (4, 6) de roulement.

2. Système de montage selon la revendication 1,
**caractérisé en ce que**
la rondelle conique (11) se présente sous la forme d'une cuvette élastique ayant un bord périphérique intérieur et un bord périphérique extérieur, l'un desdits bords étant placé sur l'une des bagues (6) de roulement, tandis que l'autre desdits bords vient de manière lâche au contact de la face latérale de l'autre bague (4) de roulement pendant le montage et jusqu'à ce que le roulement soit dans sa position de fonctionnement.
